# EUROPEAN PATENT APPLICATION

(11) **EP 4 800 833 A1**
(43) Date of publication of application: **02.09.2026**
(21) Application number: 24883767.6
(22) Date of filing: 18.03.2024
(51) Int. Cl.: H01M 50/593, H01M 50/503, H01M 50/531, H01M 10/04, H01M 10/058

(54) **BATTERY CELL, BATTERY, AND ELECTRIC DEVICE**

(30) Priority: 03.11.2023 CN 202311454200
(71) Applicant: Contemporary Amperex Technology Co., Limited, Ningde, Fujian 352100 (CN)
(72) Inventor: ZHANG, Rong, Ningde, Fujian 352100 (CN)
(74) Representative: Ziebig Hengelhaupt Intellectual Property Attorneys Patentanwaltskanzlei PartGmbB
(86) International application number: PCT/CN2024/082238
(87) International publication number: WO 2025/091752

(57) **Abstract**

Disclosed in the present application are a battery cell, a battery, and an electric device. The battery cell includes a housing, an electrode assembly, an electrode lead-out member, and an insulating bracket. The electrode assembly is accommodated in the housing and includes a main body portion and a first tab, the first tab extending out through an end of the main body portion in a first direction. The electrode lead-out member is arranged on the housing and is electrically connected to the first tab. The insulating bracket is accommodated in the housing and is arranged in the first direction with the main body portion, a portion of the insulating bracket is located between the electrode lead-out member and the housing, the insulating bracket is provided with a first accommodating recess on a side facing the main body portion, and at least part of the first tab extends into the first accommodating recess. By providing the insulating bracket, the embodiments of the present application can improve reliability.

## Description

### CROSS-REFERENCE TO RELATED APPLICATIONS

The present application claims priority to Chinese Patent Application No. 202311454200.X, filed on November 3, 2023 and entitled "Battery Cell, Battery, and Electric device", which is incorporated herein by reference in its entirety.

### TECHNICAL FIELD

The present application relates to the field of batteries, and in particular, to a battery cell, a battery, and an electric device.

### BACKGROUND

Batteries are widely used in electronic devices, such as mobile phones, notebook computers, electric bicycles, electric vehicles, electric airplanes, electric ships, electric toy cars, electric toy ships, electric toy airplanes, electric tools, and the like.

In the development of battery technologies, how to improve the reliability of a battery is a research direction in the battery technologies.

### SUMMARY

The present application provides a battery cell, a battery, and an electric device, and the reliability of the battery cell can be improved.

In a first aspect, the present application provides a battery cell, including a housing, an electrode assembly, an electrode lead-out member, and an insulating bracket. The electrode assembly is accommodated in the housing and includes a main body portion and a first tab, the first tab extending out through an end of the main body portion in a first direction. The electrode lead-out member is arranged on the housing and is electrically connected to the first tab. The insulating bracket is accommodated in the housing and is arranged in the first direction with the main body portion, a portion of the insulating bracket is located between the electrode lead-out member and the housing, the insulating bracket is provided with a first accommodating recess on a side facing the main body portion, and at least part of the first tab extends into the first accommodating recess.

The insulating bracket may accommodate and fold the first tab, reduce the risk of the first tab being reversely inserted into the main body portion, and separate at least part of the first tab from the housing to reduce the risk of short circuit. The electrode lead-out member and the housing can limit the insulating bracket, thereby reducing the shaking of the insulating bracket relative to the housing when the battery cell is subjected to an external impact, reducing the risk of the insulating bracket impacting the housing and the risk of the housing being broken, thereby improving the reliability of the battery cell.

In some embodiments, the first tab is bent in the first accommodating recess. By bending the first tab, the space occupied by the first tab in the first direction may be reduced, such that the space utilization rate is improved. Since the first tab is bent in the first accommodating recess, the insulating bracket may isolate the bent portion of the first tab from the housing, thereby reducing the risk of the first tab contacting the housing during bending deformation.

In some embodiments, the first tab includes a first portion, a bent portion, and a second portion. The first portion is connected to the main body portion and the electrode lead-out member. The bent portion extends from an end of the first portion away from the main body portion and is bent relative to the first portion, and the bent portion is accommodated in the first accommodating recess. The second portion extends from an end of the bent portion away from the first portion toward the main body portion.

The first tab is bent back in the first accommodating recess, such that the first portion and the second portion share a space in the first direction, thereby improving the space utilization rate and improving the energy density of the battery cell.

In some embodiments, the insulating bracket includes an insulating substrate, a first limiting plate and a second limiting plate, the insulating substrate and the main body portion being spaced apart from each other in the first direction. The first limiting plate and the second limiting plate are located on a side of the insulating substrate facing the main body portion and are spaced apart from each other in a second direction, the first direction being perpendicular to the second direction. The first accommodating recess is located between the first limiting plate and the second limiting plate.

The first limiting plate and the second limiting plate may limit and insulate the first tab, thereby reducing the risk of conduction between the first tab and the housing and improving the reliability.

In some embodiments, a thickness of the second limiting plate is greater than a thickness of the first limiting plate.

The second limiting plate needs to bear the stress generated by bending the first tab. Therefore, the second limiting plate may have a larger thickness than the first limiting plate to provide effective support for the first tab and reduce the risk of deformation of the second limiting plate. The first limiting plate mainly plays an insulating role, and may have a smaller thickness than the second limiting plate, so as to reduce the weight of the insulating bracket.

In some embodiments, the second limiting plate supports the first tab to shape the first tab.

In some embodiments, in the first direction, an end of the first limiting plate facing the main body portion exceeds an end of the second limiting plate facing the main body portion, and the first tab is insulated from the housing.

The first limiting plate may have a dimension greater than a dimension of the second limiting plate in the first direction, so as to insulate the first tab from the housing and reduce the risk of short circuit. The second limiting plate may have a dimension smaller than a dimension of the first limiting plate in the first direction to reduce the weight of the insulating bracket.

In some embodiments, a dimension of the first limiting plate protruding from the insulating substrate in the first direction is D1, and a dimension of the second limiting plate protruding from the insulating substrate in the first direction is D2; D1 and D2 satisfy 0.3≤D2/D1≤0.7.

D2/D1 is defined to be greater than or equal to 0.3, so as to increase the contact area between the second limiting plate and the first tab and improve the supporting effect. In this embodiment of this application, D2/D1 is defined to be greater than or equal to 0.7, to reduce a volume and a weight of the second limiting plate.

In some embodiments, the electrode lead-out member includes a first connecting plate connected to the first tab, the first connecting plate is located between the main body portion and the insulating substrate in the first direction, and an end of the first connecting plate away from the main body portion is located between the first limiting plate and the second limiting plate in the second direction. The first tab is bent in the first accommodating recess along an end of the first connecting plate away from the main body portion.

The first connecting plate may guide the first tab to bend and realize an electrical connection between the first tab and the electrode lead-out member.

In some embodiments, the electrode lead-out member further includes a second connecting plate, and the second connecting plate is connected to an end of the first connecting plate close to the main body portion. The second connecting plate separates the end of the first tab from the main body portion in the first direction.

The second connecting plate may separate the main body portion from the end of the first tab in the first direction, to reduce the risk of inserting the first tab into the main body portion, thereby improving the reliability of the battery cell.

In some embodiments, the housing includes a first housing wall, the electrode assembly and the insulating bracket are located on a same side of the first housing wall in the second direction, and the first limiting plate is located on a side of the second limiting plate facing away from the first housing wall. The electrode lead-out member further includes a third connecting plate and an electrode terminal, the third connecting plate is located on a side of the first connecting plate facing the first housing wall, the second connecting plate connects the first connecting plate and the third connecting plate, and the electrode terminal is connected to the third connecting plate and passes through the first housing wall.

The third connecting plate, the second connecting plate, and the first connecting plate enclose an accommodating space to accommodate at least part of the first tab, thereby reducing the risk of contact between the first tab and the housing. The electrode terminal penetrates the first housing wall to lead out a current to the outside of the battery cell.

In some embodiments, the first connecting plate, the second connecting plate, the third connecting plate, and the electrode terminal are of an integrally formed structure, thereby simplifying the structure of the electrode lead-out member, simplifying the assembly process, and improving the overcurrent capability.

In some embodiments, the housing includes a first housing wall, and the insulating bracket is located on a side of the first housing wall in the second direction. The insulating bracket further includes a third limiting plate, the third limiting plate is located on a side of the second limiting plate facing the first housing wall and is connected to the insulating substrate, and the first limiting plate is located on a side of the second limiting plate away from the first housing wall. In the second direction, at least part of the third limiting plate is located between the first housing wall and the electrode lead-out member.

The third limiting plate is disposed, such that the first housing wall and the electrode lead-out member limit the insulating bracket in the second direction. The electrode lead-out member may utilize the space between the second limiting plate and the third limiting plate, thereby improving the space utilization rate.

In some embodiments, in the first direction, an end of the second limiting plate facing the main body portion exceeds an end of the third limiting plate facing the main body portion. The third limiting plate may have a small size in the first direction, which may reduce the weight of the insulating bracket.

In some embodiments, the battery cell may also include an insulating member, at least part of which is located between the housing and the electrode lead-out member.

The insulating member may be configured to insulate the housing and the electrode lead-out member to reduce the risk of short circuit.

In some embodiments, the insulating bracket is connected to the insulating member. The insulating member may limit the insulating bracket, thereby improving the stability of the insulating bracket.

In some embodiments, an end of the insulating member away from the main body portion in the first direction is provided with an insulating recess, and at least part of the insulating bracket is inserted into the insulating recess.

During assembly, the insulating bracket may cooperate with the insulating recess to position the insulating member and the insulating bracket, thereby improving the assembly efficiency and accuracy.

In some embodiments, a portion of the insulating bracket inserted into the insulating recess is clamped between the housing and the insulating member in an interference fit manner in the second direction, the second direction being perpendicular to the first direction. The interference clamping manner may improve the stability of the insulating bracket, and reduce the risk of the insulating bracket coming out of the insulating recess when the battery cell is subjected to an external impact.

In some embodiments, in the first direction, the insulating bracket abuts against the main body portion. The insulating bracket may limit the main body portion in the first direction, thereby reducing the movement of the main body portion in the housing when the battery cell is subjected to an external impact, thereby improving the cycle performance of the battery cell.

In some implementations, the housing is provided with a liquid injection hole. The insulating bracket is provided with a liquid injection channel, and the liquid injection channel communicates with space between the main body portion and the insulating bracket. A peripheral wall of the liquid injection channel includes a drainage wall, the liquid injection hole is opposite to the drainage wall in an axial direction of the liquid injection hole, and the liquid injection channel is located on a side of the drainage wall facing the liquid injection hole.

The drainage wall of the insulating bracket may withstand the impact of the electrolyte solution and guide the electrolyte solution to flow in the liquid injection channel, thereby reducing the direct impact of the electrolyte solution on the main body portion and reducing the deformation of the isolating member.

In some embodiments, the liquid injection channel forms a liquid injection opening in a surface of the insulating bracket facing the main body portion. The electrolyte solution may flow out through the liquid injection opening and infiltrate the main body portion, thereby improving the infiltration efficiency.

In some embodiments, a side of the insulating bracket facing the main body portion is provided with a second accommodating recess, and the second accommodating recess and the first accommodating recess are arranged in a second direction. The liquid injection channel is located on a side of the second accommodating recess along a third direction and communicates with the second accommodating recess, and the first direction, the second direction and the third direction are perpendicular to each other.

The second accommodating recess and the liquid injection channel may change the flow direction of the electrolyte solution, reduce the direct impact on the main body portion, reduce the risk of deformation of the isolating member of the main body portion, and improve the reliability.

In some embodiments, a side of the insulating bracket facing the main body portion is provided with a plurality of accommodating recesses, the plurality of accommodating recesses are arranged in a second direction, and the second direction is perpendicular to the first direction. One of the plurality of accommodating recesses is the first accommodating recess. A sum of dimensions of the plurality of accommodating recesses in the second direction is D3, and a dimension of the insulating bracket in the second direction is D4. D3 and D4 satisfy 0.3≤D3/D4≤0.7.

The greater the value of D3/D4 is, the larger the hollow portion of the insulating bracket is, and the smaller the weight of the insulating bracket is, the higher the energy density of the battery cell is. Certainly, the greater the value of D3/D4 is, the lower the structural strength of the insulating bracket is. In this embodiment of the present application, D3/D4 is defined to 0.3 to 0.7, such that the hollow portion of the insulating bracket may be increased, the weight of the insulating bracket may be reduced, and the energy density of the battery cell may be improved on the premise that the structural strength of the insulating bracket meets the requirement.

In some embodiments, the electrode assembly further comprises a second tab, a polarity of the second tab is opposite to a polarity of the first tab, the first tab and the second tab extend from an end of the main body portion in the first direction and are spaced apart in a third direction, and the third direction is perpendicular to the first direction. A side of the insulating bracket facing the main body portion is provided with a third accommodating recess, and the third accommodating recess and the first accommodating recess are spaced apart in the third direction. At least part of the second tab extends into the third accommodating recess.

The insulating bracket is provided with both the first accommodating recess for accommodating the first tab and the third accommodating recess for accommodating the second tab, so as to reduce the risk of short circuit, simplify the structure of the battery cell, and improve the energy density of the battery cell.

In some embodiments, the housing includes a first housing wall and a second housing wall oppositely arranged in a second direction, the main body portion is located between the first housing wall and the second housing wall, and the second direction is perpendicular to the first direction. The housing is provided with a first recess, and the first recess is recessed toward the first housing wall relative to an outer surface of the second housing wall. The electrode lead-out member includes a terminal block located on a side of the first housing wall facing away from the second housing wall. In the second direction, a projection of the terminal block is located within a projection of the first recess.

The terminal block is disposed to facilitate an electrical connection to an external conductive structure, thereby improving the overcurrent capability. When the plurality of battery cells are arranged in the second direction, the first recess of one battery cell may avoid the terminal block of another battery cell, thereby improving the space utilization and improving the energy density of the battery.

In some embodiments, in the second direction, a projection of the insulating bracket at least partially overlaps the projection of the first recess.

The insulating bracket may support the bottom wall of the first recess, reduce the risk of inward collapse of the bottom wall of the first recess, and isolate the bottom wall of the first recess from the first tab, thereby reducing the risk of short circuit and improving the reliability.

In some embodiments, the housing includes a shell and a cover plate oppositely arranged in the second direction, the shell has an opening, and the cover plate covers the opening. The cover plate includes the first housing wall, the shell including the second housing wall.

In some embodiments, a dimension of the housing in the first direction is L1, a dimension of the housing in the second direction is L2, and a dimension of the housing in the third direction is L3. The first direction, the second direction Y, and the third direction are perpendicular to each other. 3≤L1/L3≤7, 2≤L3/L2≤7.

On the premise of a certain volume of the battery cell, L1/L3 is defined as 3-7 and L3/L2 is defined as 2-7, which may balance the space utilization rate of the battery cell in the first direction and the overcurrent capability of the first tab, reduce the temperature rise of the battery cell, reduce the risk of deformation of the battery cell under the external impact, and improve the reliability and cycle performance of the battery cell.

In a second aspect, the present application provides a battery, including a plurality of battery cells provided in any one embodiment.

In a third aspect, the present application provides an electric device, including the battery in the second aspect, and the battery is used to provide electric energy.

### BRIEF DESCRIPTION OF THE DRAWINGS

The feature, advantage, and technical effect of the exemplary embodiment of the present application is described below with reference to the figures.
FIG. 1 is a schematic structural diagram of a vehicle provided in some embodiments of the present application;
FIG. 2 is an exploded schematic view of a battery according to some embodiments of the present application;
FIG. 3 is a schematic structural diagram of a battery cell according to some other embodiments of the present application;
FIG. 4 is a schematic sectional diagram of a battery cell according to some embodiments of the present application;
FIG. 5 is an enlarged schematic view at a block in FIG. 4;
FIG. 6 is a schematic diagram of an insulating bracket of a battery cell according to some embodiments of the present application from one perspective;
FIG. 7 is a schematic diagram of the insulating bracket shown in FIG. 6 from another perspective.
FIG. 8 is a schematic cross-sectional view in a direction A-A in FIG. 7;
FIG. 9 is a schematic diagram of a battery cell according to in some embodiments of the present application;
FIG. 10 is a partial cross-sectional view of the battery cell shown in FIG. 9;
FIG. 11 is a cross-sectional view of an insulating bracket of a battery cell according to some other embodiments of the present application;
FIG. 12 is a cross-sectional view of a battery cell according to some other embodiments of the present application;
FIG. 13 is a schematic structural diagram of the insulating bracket shown in FIG. 12; and
FIG. 14 is a schematic structural diagram of an electrode assembly of a battery cell according to some embodiments of the present application.

The figures are not necessarily drawn to the actual scale.

### Description of reference numerals:

1, vehicle; 2, battery; 3, controller; 4, motor; 5, box; 5a, first box portion; 5b, second box portion; 5c, accommodating space; 6, battery cell; 7, converging component;
10, electrode assembly; 11, main body portion; 12, first tab; 121, first portion; 122, bent portion; 123, second portion; 124, folding portion; 13 second tab;
20, housing; 21, first housing wall; 211, liquid injection hole; 212, pressure relief mechanism; 22, second housing wall; 23 first recess; 24, second recess; 20a, shell; 20b, cover plate;
30, electrode lead-out member; 31 first connecting plate; 32, second connecting plate; 33, third connecting plate; 34, electrode terminal; 35, terminal block; 351, first terminal portion; 352 second terminal portion;
40, insulating bracket; 40a, first accommodating recess; 40b, second accommodating recess; 40c, third accommodating recess; 40d, liquid injection channel; 40e, liquid injection opening; 41, insulating substrate; 42, first limiting plate; 43, second limiting plate; 44, third limiting plate; 45, partition plate; 46; supporting block; 47, drainage wall;
50, insulating member; 50a, insulating recess;
60, first sealing member;
70, second sealing member;
X, first direction; Z, second direction; Y, third direction Z.

### DETAILED DESCRIPTION OF PREFERRED EMBODIMENTS

Hereinafter, implementations specifically disclosing a battery cell, a battery, and an electric apparatus in the present application are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the present application, the terms "a plurality of" and "various" mean two or more.

Unless otherwise specified, the numerical values of each parameter mentioned in the present application can be measured by various test methods commonly used in the art, for example, they can be measured according to the test methods provided in the embodiments of the present application. A test temperature for each parameter is 25°C, unless otherwise specified.

In the embodiments of the present application, the battery cell may be a secondary battery, which refers to a battery cell that may be continuously used by activating an active material by means of charging the battery cell after discharging thereof.

The battery cell usually includes an electrode assembly. The electrode assembly includes a positive electrode and a negative electrode. During charging and discharging of the battery cell, intercalation/de-intercalation of active ions (e.g., lithium ions) are enabled at the positive electrode and negative electrode by moving the active ions between the positive electrode and negative electrode. Exemplarily, the electrode assembly further includes an insulating member disposed between the positive electrode and the negative electrode to prevent the positive and negative electrodes from being short-circuited and to allow active ions to pass therethrough.

The battery cell may be, but is not limited to, a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead-acid battery, or the like.

The battery cell may be a prismatic battery cell, or a battery cell of other shapes. The prismatic battery cell includes a square-casing battery cell, a blade-shaped battery cell, and a polygonal prismatic battery cell, for example, a hexagonal prismatic battery cell, and the like.

The battery cell may be a hard case battery cell, a pouch battery cell, or other types of battery cells.

A battery mentioned in the embodiments of the present application refers to a single physical module including one or a plurality of battery cells to provide a higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

The electrode assembly is usually provided with a tab that may conduct a current from the electrode assembly. When the battery cell is subjected to an external impact, the tab is prone to deformation, which causes the risk of contact between the tab and the housing and the risk of the tab being reversely inserted into the electrode assembly, resulting in a short circuit and affecting the reliability of the battery cell.

In view of this, the embodiments of the present application provide a technical solution, in which an insulating bracket is disposed inside a battery cell to fold and accommodate a tab, thereby reducing a short circuit risk and improving the reliability of the battery cell.

The technical solutions described in the embodiments of the present application are all applicable to various electrical devices using batteries.

The electric device may be a vehicle, a mobile phone, a portable device, a notebook computer, a ship, a spacecraft, an electric toy, an electric tool, and the like. The vehicle may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present application, the above described electric device is not particularly limited.

To facilitate description, in the following embodiments, as an example for description, an electric device is a vehicle.

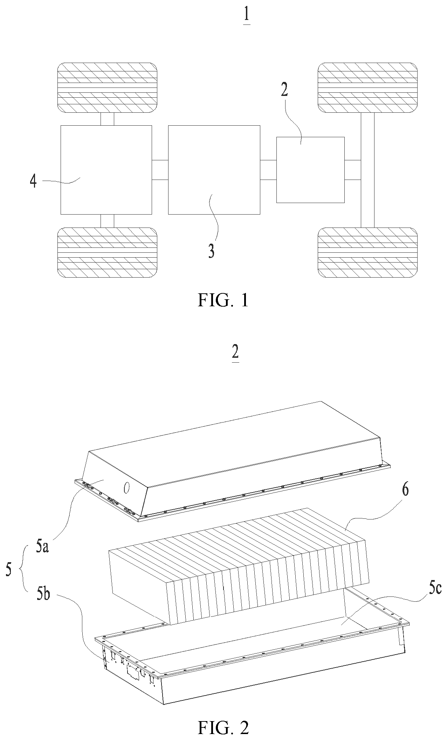

FIG. 1 is a schematic structural diagram of a vehicle according to some embodiments of the present application.

As shown in FIG. 1, inside the vehicle 1, a battery 2 is provided, which may be provided at the bottom, head, or tail of the vehicle 1. The battery 2 may be used to power the vehicle 1, for example, the battery 2 may be used as an operating power source of the vehicle 1.

The vehicle 1 may further include a controller 3 and a motor 4, where the controller 3 is used to control the battery 2 to power the motor 4, for example, for a working power requirement of the vehicle 1 during starting, navigating, and driving.

In some embodiments of the present application, the battery 2 may be used not only as an operating power source for the vehicle 1, but also as a driving power source for the vehicle 1, instead of or partially instead of fuel or natural gas to provide driving power for the vehicle 1.

FIG. 2 is an exploded schematic view of a battery according to some embodiments of the present application.

As shown in FIG. 2, the battery 2 includes a box 5 and a battery cell 6. The battery cell 6 is accommodated in the box 5.

The box 5 is used to accommodate the battery cell 6, and the box 5 may have various structures. In some embodiments, the box 5 may include a first box portion 5a and a second box portion 5b, the first box portion 5a and the second box portion 5b cover each other, and the first box portion 5a and the second box portion 5b jointly define the accommodation space 5c for accommodating the battery cell 6. The second box portion 5b may be a hollow structure with an opening at one end, the first box portion 5a is a plate-shaped structure, and the first box portion 5a covers an opening side of the second box portion 5b to form the box 5 having the accommodation space 5c; and the first box portion 5a and second box portion 5b may also both be a hollow structure with an opening at one end, and an opening side of the first box portion 5a covers an opening side of the second box portion 5b to form the box 5 having the accommodation space 5c. Certainly, the first box portion 5a and second box portion 5b may be in various shapes such as cylinder, rectangular cuboid, etc.

To increase sealing performance after the first box portion 5a and the second box portion 5b are connected, a sealing member, for example, a sealant or a sealing ring or the like may be provided between the first box portion 5a and the second box portion 5b.

Assuming that the first box portion 5a covers the top of the second box portion 5b, the first box portion 5a may also be referred to as an upper box cover, and the second box portion 5b may also be referred to as a lower box.

In the battery 2, one or more battery cells 6 may be provided. If a plurality of battery cells 6 are provided, the plurality of battery cells 6 may be subjected to series connection, parallel connection, or series-parallel connection, and the series-parallel connection means that the plurality of battery cells 6 are subjected to both series connection, and parallel connection. The plurality of battery cells 6 may be subjected to series connection, parallel connection, or series-parallel connection directly, and then an integration formed by the plurality of battery cells 6 is accommodated in the box 5. Certainly, alternatively, a battery module may be formed by integrating the plurality of battery cells 6 by series connection, parallel connection, or series-parallel connection, and then a plurality of battery modules are integrated by series connection, parallel connection, or series-parallel connection, and accommodated in the box 5.

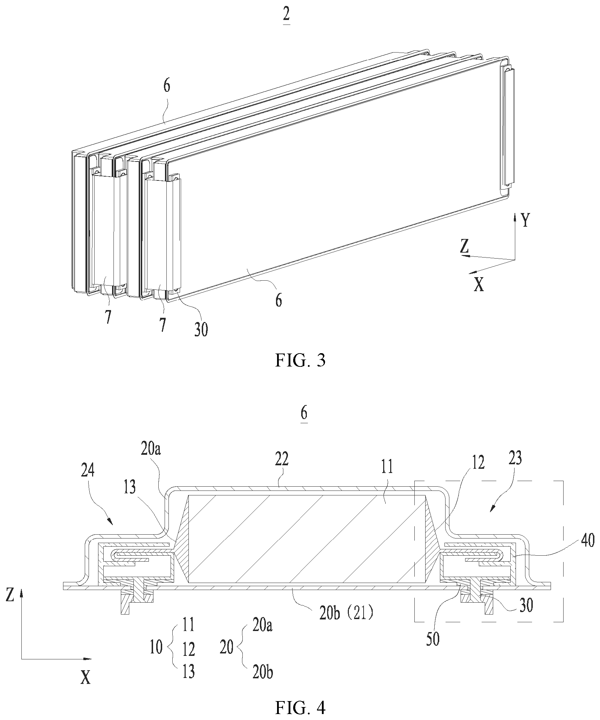

FIG. 3 is a schematic structural diagram of a battery cell according to some other embodiments of this application.

As shown in FIG. 3, in some embodiments, the battery 2 includes a plurality of battery cells 6 and a plurality of converging components 7. The plurality of converging components 7 may connect the plurality of battery cells 6 by way of series connection, parallel connection, or series-parallel connection.

FIG. 4 is a schematic cross-sectional view of a battery cell according to some embodiments of the present application.

Referring to FIG. 4, the embodiment of the present application provides a battery cell 6, including a housing 20 and an electrode assembly 10, where the electrode assembly 10 is accommodated in the housing 20.

The electrode assembly 10 includes a positive electrode and a negative electrode. During charge and discharge of the battery cell 6, intercalation/de-intercalation of active ions (e.g., lithium ions) are enabled at the positive pole and negative pole by moving the active ions between the positive pole and negative pole. Optionally, the electrode assembly 10 further includes an insulating member disposed between the positive electrode and the negative electrode to prevent the positive and negative electrodes from being short-circuited and to allow active ions to pass therethrough.

In some embodiments, the positive electrode may be a positive electrode sheet which may include a positive electrode current collector and a positive electrode active material layer disposed on at least one surface of the positive electrode current collector.

As an example, the positive electrode current collector has two surfaces opposite in the thickness direction thereof, and the positive electrode active material layer is disposed on either one or both of the two opposite surfaces of the positive electrode current collector.

As an example, a metal foil or a composite current collector may be used for the positive electrode current collector. For example, as the metal foil, aluminum or stainless steel which is subjected to surface treatment by silver, stainless steel, copper, aluminum, nickel, a carbon electrode, carbon, nickel, titanium, or the like may be employed. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive electrode active material which may include at least one of the following materials: a lithium-containing phosphate, a lithium-transition metal oxide, and respective modified compounds thereof. However, the present application is not limited to these materials, and another conventional material that can be used as a positive electrode active material layer of a battery may also be used. These positive electrode active material layers may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂(also referred to as NCM₃₃₃), LiNi_{0.5}Co_{0.2}Mn_{0.3}O₂(also referred to as NCM₅₂₃), LiNi_{0.5}Co_{0.25}Mn_{0.25}O₂(also referred to as NCM₂₁₁), LiNi_{0.6}Co_{0.2}Mn_{0.2}O₂(also referred to as NCM₆₂₂), LiNi_{0.8}Co_{0.1}Mn_{0.1}O₂(also referred to as NCM₈₁₁)), lithium nickel cobalt aluminum oxide (e.g., LiNi_{0.80}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, the positive electrode active material layer may not be disposed on the surface of the foamed metal, and of course, the positive electrode active material layer may also be disposed. As an example, within the foamed metal, a lithium source material, which is a lithium metal and/or a lithium-rich material, a potassium metal or a sodium metal may also be filled or/and deposited.

In some embodiments, the negative electrode may be a negative electrode sheet that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative active material of a battery may also be used. These negative active materials may be used alone or in combination of two or more thereof.

In some embodiments, the material of the positive current collector may be aluminum and the material of the negative current collector may be copper.

In some embodiments, the isolating member includes a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics. The separator may be a single-layer thin film or may be a multi-layer composite thin film, which is not particularly limited. When the separator is a multi-layer composite thin film, materials of each layer may be the same or different, which is not particularly limited. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

The housing 20 has a hollow structure with an accommodation space formed therein for accommodating the electrode assembly 10 and an electrolyte. Specifically, the shape of the housing 20 may be determined based on a specific shape of the electrode assembly 10. For example, if the electrode assembly 10 of a rectangular parallelepiped structure, a rectangular parallelepiped housing may be used.

The housing 20 may be made of various materials, for example, the housing 20 may be made of metal or plastic. Optionally, the housing 20 may be made of a plurality of copper, iron, aluminum, steel, or an aluminum alloy. Exemplarily, the housing 20 may be a steel casing, an aluminum casing, a plastic casing (e.g., polypropylene), a composite metal casing (e.g., a copper-aluminum composite casing), an aluminum plastic film, or the like.

As an example, the housing 20 includes a shell 20a and a cover plate 20b, the shell 20a has an opening, and the cover plate 20b is used for covering the opening.

The shell 20a is a component to cooperate with the cover plate 20b to form an internal cavity of the battery cell 6, where the formed internal cavity may be used to accommodate the electrode assembly 10, an electrolyte solution, and other components.

The shell 20a and the cover plate 20b may be independent components. Exemplarily, an opening may be formed in the shell 20a, and the internal cavity of the battery cell 6 may be formed by closing the cover plate 20b at the opening.

The shell 20a may be in various shapes and various dimensions, such as a cuboid, a cylinder, a hexagonal prism, and the like. Specifically, the shape of the shell 20a may be determined based on a specific shape and dimension of the electrode assembly 10. The shell 20a may be made of various materials, for example, copper, iron, aluminum, stainless steel, an aluminum alloy, etc.

The shape of the cover plate 20b may be adapted to the shape of the shell 20a to fit the shell 20a. The materials for the cover plate 20b may be the same as or different from that for the shell 20a. Optionally, the cover plate 20b may be made of a material with certain hardness and strength (e.g., copper, iron, aluminum, stainless steel, an aluminum alloy, plastic, etc). As such, the cover plate 20b is less prone to deformation under compressive impact, thereby enabling the battery cell 6 to have higher structural strength and improved reliability.

The cover plate 20b may be connected to the shell 20a by welding, gluing, clipping or other means.

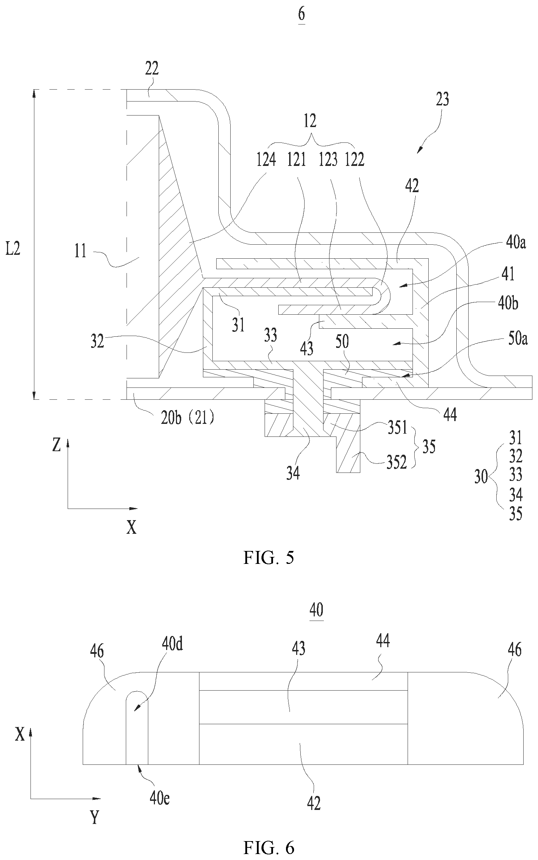

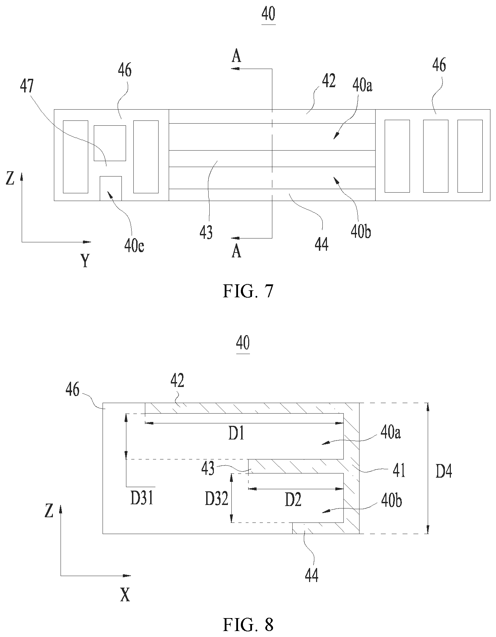

FIG. 5 is an enlarged schematic view of FIG. 4 at a block; FIG. 6 is a schematic diagram of an insulating bracket of a battery cell according to some embodiments of the present application from one perspective; FIG. 7 is a schematic diagram of the insulating bracket shown in FIG. 6 from another perspective; and FIG. 8 is a schematic cross-sectional view in a direction A-A in FIG. 7.

Referring to FIGS. 5-8 together, in some embodiments, the battery cell 6 includes an electrode assembly 10, a housing 20, an electrode lead-out member 30, and an insulating bracket 40. The electrode assembly 10 is accommodated in the housing 20 and includes a main body portion 11 and a first tab 12, the first tab 12 extending from an end of the main body portion 11 in the first direction X. The electrode lead-out member 30 is arranged on the housing 20 and electrically connected to the first tab 12. The insulating bracket 40 is accommodated in the housing 20 and is arranged in the first direction X with the main body portion 11, a portion of the insulating bracket 40 is located between the electrode lead-out member 30 and the housing 20, the insulating bracket 40 is provided with a first accommodating recess 40a on a side facing the main body portion 11, and at least part of the first tab 12 extends into the first accommodating recess 40a.

The electrode assembly 10 is a component in the battery cell 6 in which an electrochemical reaction occurs. The housing 20 may include one or more electrode assemblies 10. The electrode assembly 10 may be a wound structure, a laminated structure, a wound laminated composite structure, or other structures.

The electrode assembly 10 may have a cylindrical shape, a flat shape, a polygonal column shape, or the like.

As an example, the electrode assembly 10 includes a first electrode sheet, a second electrode sheet and a separator, the polarity of the first electrode sheet is opposite to the polarity of the second electrode sheet, and the separator is used to insulate and separate the first electrode sheet and the second electrode sheet. The first electrode sheet includes a first current collector and a first active material layer coated on a surface of the first current collector, and the second electrode sheet includes a second current collector and a second active material layer coated on a surface of the second current collector. The main body portion 11 includes a portion of the first current collector coated with the first active material layer, a portion of the second current collector coated with the second active material layer, the first active material layer, and the second active material layer, and the first tab 12 includes a portion of the first current collector not coated with the first active material layer. One of the first electrode sheet and the second electrode sheet is a positive electrode sheet, and the other is a negative electrode sheet.

The first tab 12 extends out from one end of the main body portion 11 in the first direction X; and alternatively, there may be two first tabs 12, and the two first tabs 12 extend from both ends of the main body portion 11 in the first direction X, respectively.

Exemplarily, the electrode lead-out member 30 may be configured to electrically connect the electrode assembly 10 to a current outside the battery cell, to implement charging and discharging of the battery cell.

The first tab 12 may be directly connected to the electrode lead-out member 30, or may be indirectly connected to the electrode lead-out member 30 via other conducting structures.

The electrode lead-out member 30 may be fixed to the housing 20. Exemplarily, the electrode lead-out member 30 may be fixed to the shell 20a or may be fixed to the cover plate 20b.

The insulating bracket 40 may be provided with one first accommodating recess 40a or a plurality of first accommodating recesses 40a.

The insulating bracket 40 may accommodate and fold the first tab 12, reduce the risk of the first tab 12 being reversely inserted into the main body portion 11, and separate at least part of the first tab 12 from the housing 20 to reduce the risk of short circuit. The electrode lead-out member 30 and the housing 20 can also limit the insulating bracket 40, thereby reducing the shaking of the insulating bracket 40 relative to the housing 20 when the battery cell 6 is subjected to an external impact, reducing the risk of the insulating bracket 40 impacting the housing 20 and the risk of the housing 20 being broken, and improving the reliability of the battery cell 6.

In some embodiments, the insulating bracket 40 is fixed to the housing 20. Optionally, the electrode lead-out member 30 and the housing 20 clamp a portion of the insulating bracket 40 to fix the insulating bracket 40 to the housing 20.

The electrode lead-out member 30 is used to fix the insulating bracket 40, which may simplify the structure of the battery cell and reduce the difficulty of mounting the insulating bracket 40.

In some embodiments, the first tab 12 is bent in the first accommodating recess 40a.

In this embodiment of the present application, the first tab 12 is bent, such that the space occupied by the first tab 12 in the first direction X may be reduced, and the space utilization may be improved. Since the first tab 12 is bent in the first accommodating recess 40a, the insulating bracket 40 may isolate the bent portion of the first tab 12 from the housing 20, thereby reducing the risk of the first tab 12 contacting the housing 20 during bending deformation.

In some embodiments, the first tab 12 includes a first portion 121, a bent portion 122, and a second portion 123. The bent portion 122 extends from an end of the first portion 121 away from the main body portion 11 and is bent relative to the first portion 121, the bent portion 122 is accommodated in the first accommodating recess 40a, and the second portion 123 extends from an end of the bent portion 122 away from the first portion 121 toward the main body portion 11.

The first tab 12 is bent back in the first accommodating recess 40a, such that the first portion 121 and the second portion 123 share a space in the first direction X, thereby improving the space utilization rate and improving the energy density of the battery cell.

In some embodiments, the first tab 12 further includes a folding portion 124, and the folding portion 124 is connected between the first portion 121 and the main body portion 11.

Exemplarily, the first tab 12 includes a plurality of conductive layers arranged in a stacked manner. In the folding portion 124, the plurality of conductive layers are folded toward the middle, and in the first portion 121, the plurality of conductive layers are stacked and attached together.

In some embodiments, the insulating bracket 40 includes an insulating substrate 41, a first limiting plate 42, and a second limiting plate 43, and the insulating substrate 41 and the main body portion 11 are spaced apart from each other in the first direction X. The first limiting plate 42 and the second limiting plate 43 are located on a side of the insulating substrate 41 facing the main body portion 11 and are spaced apart from each other in the second direction Z, and the first direction X is perpendicular to the second direction Z. The first accommodating recess 40a is located between the first limiting plate 42 and the second limiting plate 43.

The insulating substrate 41, the first limiting plate 42, and the second limiting plate 43 are configured to define the first accommodating recess 40a.

The first limiting plate 42 and the second limiting plate 43 may limit and insulate the first tab 12, thereby reducing the risk of conduction between the first tab 12 and the housing 20 and improving the reliability.

In some embodiments, in the second direction Z, the bent portion 122 is located between the first limiting plate 42 and the second limiting plate 43. The second portion 123 is located on a side of the first portion 121 close to the second limiting plate 43.

In some embodiments, a thickness of the second limiting plate 43 is greater than a thickness of the first limiting plate 42.

The second limiting plate 43 needs to bear the stress generated by bending the first tab 12. Therefore, the second limiting plate 43 may have a larger thickness than the first limiting plate 42 to provide effective support for the first tab 12 and reduce the risk of deformation of the second limiting plate 43. The first limiting plate 42 mainly plays an insulating role, and may have a smaller thickness than the second limiting plate 43, so as to reduce the weight of the insulating bracket 40.

In some embodiments, a ratio of the thickness of the second limiting plate 43 to the thickness of the first limiting plate 42 is 1.2-3, so as to balance the strength and weight of the second limiting plate 43, and reduce the total weight of the insulating bracket 40 in a case that the strength of the second limiting plate 43 meets the requirement.

Optionally, the ratio of the thickness of the second limiting plate 43 to the thickness of the first limiting plate 42 is 1.5-2.

In some embodiments, the second limiting plate 43 supports the first tab 12 to shape the first tab 12.

In some embodiments, the second limiting plate 43 supports the second portion 123 of the first tab 12.

In some embodiments, in the first direction X, an end of the first limiting plate 42 facing the main body portion 11 exceeds beyond an end of the second limiting plate 43 facing the main body portion 11, and the first tab 12 is insulated from the housing 20.

The first limiting plate 42 may have a dimension greater than a dimension of the second limiting plate 43 in the first direction X, so as to insulate the first tab 12 from the housing 20 and reduce the risk of short circuit. The second limiting plate 43 may have a dimension smaller than a dimension of the first limiting plate 42 in the first direction X to reduce the weight of the insulating bracket 40.

In some embodiments, the first limiting plate 42 separates the first portion 121 from the housing 20.

In some embodiments, a dimension of the first limiting plate 42 protruding from the insulating substrate 41 in the first direction X is D1, and a dimension of the second limiting plate 43 protruding from the insulating substrate 41 in the first direction X is D2. D1 and D2 satisfy 0.3≤D2/D1≤0.7.

Optionally, D2/D1 is 0.3, 0.4, 0.5, 0.6, or 0.7.

In this embodiment of the present application, D2/D1 is defined to be greater than or equal to 0.3, so as to increase the contact area between the second limiting plate 43 and the first tab 12 and improve the supporting effect. In this embodiment of this application, D2/D1 is defined to be greater than or equal to 0.7, to reduce a volume and a weight of the second limiting plate 43.

In some embodiments, the electrode lead-out member 30 includes a first connecting plate 31 connected to the first tab 12, the first connecting plate 31 is located between the main body portion 11 and the insulating substrate 41 in the first direction X, and an end of the first connecting plate 31 away from the main body portion 11 is located between the first limiting plate 42 and the second limiting plate 43 in the second direction Z. The first tab 12 is bent in the first accommodating recess 40a along an end of the first connecting plate 31 away from the main body portion 11.

The first connecting plate 31 may guide the first tab 12 to bend and realize an electrical connection between the first tab 12 and the electrode lead-out member 30.

In some embodiments, the electrode lead-out member 30 further includes a second connecting plate 32, and the second connecting plate 32 is connected to an end of the first connecting plate 31 close to the main body portion 11. The second connecting plate 32 separates the end of the first tab 12 from the main body portion 11 in the first direction X.

The second connecting plate 32 may separate the main body portion 11 from the end of the first tab 12 in the first direction X, to reduce the risk of inserting the first tab 12 into the main body portion 11, thereby improving the reliability of the battery cell 6.

In some embodiments, the electrode lead-out member 30 includes a first connecting plate 31 and a second connecting plate 32, the first connecting plate 31 is located between the main body portion 11 and the insulating substrate 41 in the first direction X, and in the second direction Z, at least part of the first connecting plate 31 is located between the first portion 121 and the second portion 123 and is electrically connected to the first portion 121. The second connecting plate 32 is connected to an end of the first connecting plate 31 close to the main body portion 11 and is located on a side of the first connecting plate 31 close to the second portion 123. The second connecting plate 32 separates the second portion 123 and the main body portion 11 in the first direction X.

The first connecting plate 31 can support the first portion 121 and realize an electrical connection between the first tab 12 and the electrode lead-out member 30. The second connecting plate 32 may separate the main body portion 11 from the second portion 123 in the first direction X, to reduce a risk of inserting the first tab 12 into the main body portion 11, thereby improving the reliability of the battery cell 6.

In some embodiments, the first portion 121 is welded to the first connecting plate 31.

In some embodiments, the plurality of conductive layers of the second portion 123 are stacked and independent, and the second limiting plate 43 and the first connecting plate 31 may fold the plurality of conductive layers of the second portion 123 from both sides, thereby reducing the risk of scattering the plurality of conductive layers.

In some embodiments, in the second direction Z, an end of the first connecting plate 31 away from the main body portion 11 is located between the first limiting plate 42 and the second limiting plate 43. The first tab 12 is bent along an end of the first connecting plate 31 away from the main body portion 11 to form a bent portion 122. The second limiting plate 43 supports the second portion 123.

When the electrode assembly 10 and the insulating bracket 40 are assembled in the first direction X, a free end of the first tab 12 may first extend into the first accommodating recess 40a, and then be bent along the end of the first connecting plate 31 away from the main body portion 11 after being blocked by the insulating substrate 41.

The end of the first connecting plate 31 away from the main body portion 11 is located between the first limiting plate 42 and the second limiting plate 43, such that the bent portion 122 may be accommodated in the first accommodating recess 40a. In addition, the second limiting plate 43 may further support an end of the first connecting plate 31 away from the main body portion 11, to reduce deformation of the first connecting plate 31.

In some embodiments, the housing 20 includes a first housing wall 21, the electrode assembly 10 and the insulating bracket 40 are located on a same side of the first housing wall 21 in the second direction Z, and the first limiting plate 42 is located on a side of the second limiting plate 43 facing away from the first housing wall 21.

In some embodiments, the electrode lead-out member 30 further includes a third connecting plate 33 and an electrode terminal 34, the third connecting plate 33 is located on a side of the first connecting plate 31 facing the first housing wall 21, the second connecting plate 32 connects the first connecting plate 31 and the third connecting plate 33, and the electrode terminal 34 is connected to the third connecting plate 33 and passes through the first housing wall 21.

Exemplarily, the first housing wall 21 may be a wall of the shell 20a, or may be at least part of the cover plate 20b. Optionally, the first housing wall 21 is a flat wall.

The electrode terminal 34 and the third connecting plate 33 may be of an integrated structure, or may be connected to the third connecting plate 33 by welding, riveting or other methods.

There may be one or more of the electrode terminals 34.

The third connecting plate 33, the second connecting plate 32, and the first connecting plate 31 enclose an accommodating space to accommodate at least part of the first tab 12, thereby reducing the risk of contact between the first tab 12 and the housing 20. The electrode terminal 34 passes through the first housing wall 21 to lead out a current to the outside of the battery cell 6.

In some embodiments, the second portion 123 may be accommodated in the accommodating space enclosed by the third connecting plate 33, the second connecting plate 32, and the first connecting plate 31.

In some embodiments, the third connecting plate 33, the second connecting plate 32, and the first connecting plate 31 form an integrated C-shaped structure.

In some embodiments, the first connecting plate 31, the second connecting plate 32, the third connecting plate 33, and the electrode terminal 34 are of an integrally formed structure, thereby simplifying the structure of the electrode lead-out member 30, simplifying the assembly process, and improving the overcurrent capability.

In some embodiments, the electrode lead-out member 30 further includes a terminal block 35, and the terminal block 35 is located on a side of the first housing wall 21 facing away from the first tab 12 and is connected to the electrode terminal 34. The terminal block 35 is disposed to facilitate an electrical connection to an external conductive structure, thereby improving the overcurrent capability.

Exemplarily, the terminal block 35 may be configured to connect to the converging component. Optionally, the terminal block 35 and the converging component are arranged and connected in the first direction X.

In some embodiments, the terminal block 35 includes a first terminal portion 351 and a second terminal portion 352, the first terminal portion 351 is connected to the electrode terminal 34, and the second terminal portion 352 protrudes from a surface of the first terminal portion 351 facing away from the first housing wall 21.

Both the first terminal portion 351 and the second terminal portion 352 may be configured to be connected to the converging component, and by arranging the second terminal portion 352, the connection area between the terminal block 35 and the converging component may be increased.

In some embodiments, an end surface of the first terminal portion 351 facing the converging component in the first direction X is flush with an end surface of the second terminal portion 352 facing the converging component in the first direction X.

In some embodiments, the electrode terminal 34 is riveted to the terminal block 35. Exemplarily, the electrode terminal 34 is riveted to the first terminal portion 351.

In some embodiments, the housing 20 includes a first housing wall 21, and the insulating bracket 40 is located on a side of the first housing wall 21 in the second direction Z. The insulating bracket 40 further includes a third limiting plate 44, the third limiting plate 44 is located on a side of the second limiting plate 43 facing the first housing wall 21 and is connected to the insulating substrate 41, and the first limiting plate 42 is located on a side of the second limiting plate 43 away from the first housing wall 21. In the second direction Z, at least part of the third limiting plate 44 is located between the first housing wall 21 and the electrode lead-out member 30.

The third limiting plate 44 is arranged, such that the first housing wall 21 and the electrode lead-out member 30 limit the insulating bracket 40 in the second direction Z. The electrode lead-out member 30 may utilize the space between the second limiting plate 43 and the third limiting plate 44, thereby improving the space utilization rate.

In some embodiments, at least part of the third connecting plate 33 is located between the second limiting plate 43 and the third limiting plate 44.

In some embodiments, at least part of the third limiting plate 44 is located between the first housing wall 21 and the third connecting plate 33. Exemplarily, the first housing wall 21 and the third connecting plate 33 clamp the third limiting plate 44 in the second direction Z, to fix the insulating bracket 40 to the first housing wall 21.

In some embodiments, the third limiting plate 44, the second limiting plate 43 and the insulating substrate 41 define a second accommodating recess 40b, and at least part of the third connecting plate 33 is arranged in the second accommodating recess 40b.

The first accommodating recess 40a and the second accommodating recess 40b are arranged in the second direction Z.

In some embodiments, in the first direction X, an end of the second limiting plate 43 facing the main body portion 11 exceeds beyond an end of the third limiting plate 44 facing the main body portion 11.

The third limiting plate 44 may have a smaller dimension in the first direction X, which may reduce the weight of the insulating bracket 40 and reduce the risk of interference between the third limiting plate 44 and the electrode terminal 34.

In some embodiments, hardness of the third limiting plate 44 is less than hardness of the second limiting plate 43. By reducing the thickness of the third limiting plate 44, the space occupied by the third limiting plate 44 in the second direction Z and the weight of the third limiting plate 44 may be reduced, and the energy density of the battery cell may be improved.

In some embodiments, the battery cell 6 may also include an insulating member 50, at least part of which is located between the housing 20 and the electrode lead-out member 30. The insulating member 50 may be configured to insulate and isolate the housing 20 and the electrode lead-out member 30 to reduce the risk of short circuit.

In some embodiments, the insulating bracket 40 is connected to the insulating member 50.

Exemplarily, the third limiting plate 44 may be connected to the insulating member 50 by welding, bonding, abutting, or other means.

The insulating member 50 may limit the insulating bracket 40, thereby improving the stability of the insulating bracket 40.

In some embodiments, the electrode lead-out member 30 fixes the insulating member 50 to the first housing wall 21.

In some embodiments, an end of the insulating member 50 away from the main body portion 11 in the first direction X is provided with an insulating recess 50a, and at least part of the insulating bracket 40 is inserted into the insulating recess 50a.

During assembly, the insulating bracket 40 may cooperate with the insulating recess 50a to position the insulating member 50 and the insulating bracket 40, thereby improving the assembly efficiency and accuracy.

In some embodiments, the insulating recess 50a is arranged at an end of the insulating member 50 close to the insulating substrate 41 in the first direction X.

In some embodiments, at least part of the third limiting plate 44 is inserted into the insulating recess 50a.

In some embodiments, the insulating recess 50a is recessed from a surface of the insulating member 50 that is attached to the first housing wall 21. An end of the insulating recess 50a in the second direction Z may be open, which may simplify the molding process of the insulating recess 50a.

In some embodiments, a portion of the insulating bracket 40 inserted into the insulating recess 50a is clamped between the housing 20 and the insulating member 50 in the second direction Z by interference fit. The interference clamping manner may improve the stability of the insulating bracket 40, and reduce the risk of the insulating bracket 40 coming out of the insulating recess 50a when the battery cell 6 is subjected to an external impact.

In some embodiments, a portion of the third limiting plate 44 inserted into the insulating recess 50a is clamped between the first housing wall 21 and the insulating member 50 by interference fit.

In some embodiments, in the first direction X, the insulating bracket 40 abuts against the main body portion 11. The insulating bracket 40 may limit the main body portion 11 in the first direction X, thereby reducing the movement of the main body portion 11 in the housing 20 and improving the cycle performance of the battery cell 6 when the battery cell 6 is subjected to an external impact.

In some embodiments, the insulating bracket 40 abuts against the isolating member of the main body portion 11.

In some embodiments, the insulating bracket 40 includes two support blocks 46, and in the third direction Y, the first limiting plate 42, the second limiting plate 43, and the third limiting plate 44 are arranged between the two support blocks 46 and connected to the two support blocks 46. Exemplarily, the first direction X, the second direction and the third direction are perpendicular to each other.

The first limiting plate 42, the second limiting plate 43, the insulating substrate 41, and the two support blocks 46 together define the first accommodating recess 40a.

By arranging the support blocks 46, the structural strength of the insulating bracket 40 may be improved.

In some embodiments, a weight-reducing hole is formed inside each of the support blocks 46 to reduce the weight of the support blocks. The weight-losing hole may also accommodate an electrolyte.

In some embodiments, in the first direction X, an end of each of the support blocks 46 facing the main body portion 11 exceeds beyond the first limiting plate 42, the second limiting plate 43, and the third limiting plate 44 to abut against the main body portion 11.

In some embodiments, a side of the insulating bracket 40 facing the main body portion 11 is provided with a plurality of accommodating recesses, the plurality of accommodating recesses are arranged in the second direction Z, and the second direction Z is perpendicular to the first direction X. One of the plurality of accommodating recesses is the first accommodating recess 40a. A sum of dimensions of the plurality of accommodating recesses in the second direction is D3, and a dimension of the insulating bracket 40 in the second direction is D4. D3 and D4 satisfy 0.3≤D3/D4≤0.7.

The greater the value of D3/D4 is, the larger the hollow portion of the insulating bracket 40 is, and the smaller the weight of the insulating bracket 40 is, the higher the energy density of the battery cell is. Certainly, the greater the value of D3/D4 is, the lower the structural strength of the insulating bracket 40 is. In this embodiment of the present application, D3/D4 is defined to 0.3 to 0.7, such that the hollow portion of the insulating bracket 40 may be increased, the weight of the insulating bracket 40 may be reduced, and the energy density of the battery cell may be improved on the premise that the structural strength of the insulating bracket 40 meets the requirement.

In some embodiments, D3/D4 may be 0.3, 0.4, 0.5, 0.6, or 0.7.

In some embodiments, the insulating bracket 40 is provided with two accommodating recesses, that is, the first accommodating recess 40a and the second accommodating recess 40b.

The dimension of the first accommodating recess 40a in the second direction Z is D31, and the dimension of the second accommodating recess 40b in the second direction Z is D32. D3=D31+D32.

In some embodiments, the housing 20 includes a first housing wall 21 and a second housing wall 22 oppositely arranged in a second direction Z, the main body portion 11 is located between the first housing wall 21 and the second housing wall 22, and the second direction Z is perpendicular to the first direction X.

The first housing wall 21 is a wall of the housing 20 having a certain thickness, and the second housing wall 22 is a wall of the housing 20 having a certain thickness. The first housing wall 21 and the second housing wall 22 are spaced apart from each other in the second direction Z.

The first housing wall 21 may have various shapes, such as, a circular shape, a rectangular shape, a square shape or other shapes. The second housing wall 22 may have various shapes, such as, a circular shape, a rectangular shape, a square shape and other shapes.

The first housing wall 21 may be a flat wall, or may be a curved wall with a certain curvature. The second housing wall 22 may be a flat wall, or may be a curved wall with a certain curvature.

Exemplarily, an area of a projection of the first housing wall 21 in the second direction Z may be used as an area of the first housing wall 21, and an area of a projection of the second housing wall 22 in the second direction Z may be used as an area of the second housing wall 22. The area of the second housing wall 22 may be equal to the area of the first housing wall 21. Exemplarily, the second housing wall 22 and the first housing wall 21 have the same shape and dimension. Alternatively, the area of the second housing wall 22 may also be smaller than the area of the first housing wall 21.

In some embodiments, the housing 20 is provided with a first recess 23, and the first recess 23 is recessed toward the first housing wall 21 relative to an outer surface of the second housing wall 22. The electrode lead-out member 30 includes a terminal block 35 located on a side of the first housing wall 21 facing away from the second housing wall 22. In the second direction Z, the projection of the terminal block 35 is located within the projection of the first recess 23.

The terminal block 35 is disposed to facilitate an electrical connection to an external conductive structure, thereby improving the overcurrent capability. When the plurality of battery cells 6 are arranged in the second direction Z, the first recess 23 of one battery cell 6 may avoid the terminal block 35 of another battery cell 6, thereby improving the space utilization and improving the energy density of the battery.

In some embodiments, in the second direction Z, at least part of the first tab 12 is located between the bottom wall of the first recess 23 and the first housing wall 21. The first tab 12 has a small requirement for space in the second direction Z, and therefore, the first recess 23 may be arranged on the outer side of the housing 20, which may reduce the volume of the battery cell 6 and improve the volume energy density of the battery cell 6.

In some embodiments, in the second direction Z, a projection of the insulating bracket 40 at least partially overlaps a projection of the first recess 23.

The insulating bracket 40 may support the bottom wall of the first recess 23, reduce the risk of inward collapse of the bottom wall of the first recess 23, and isolate the bottom wall of the first recess 23 from the first tab 12, thereby reducing the risk of short circuit and improving the reliability.

In some embodiments, the first recess 23 penetrates the housing 20 in the third direction Y.

In some embodiments, the area of the second housing wall 22 is smaller than the area of the first housing wall 21.

In some embodiments, the electrode assembly 10 further includes a second tab 13, and the first tab 12 and the second tab 13 have opposite polarities. Exemplarily, the second tab 13 includes a portion of the second current collector that is not coated with the second active material layer.

The second tab 13 and the first tab 12 may extend from the same end of the main body portion 11 in the first direction X, or may extend from both ends of the main body portion 11 in the first direction X, respectively.

In some embodiments, the first tab 12 and the second tab 13 extend from both ends of the main body portion 11 in the first direction X, respectively, to reduce the risk of contact and short circuit between the first tab 12 and the second tab 13.

The first tab 12 and the second tab 13 extend from both ends of the main body portion 11 in the first direction X, respectively, and may share space in the third direction Y, such that the first tab 12 may have a larger dimension in the third direction Y, thereby improving the overcurrent capability of the first tab 12 and reducing the temperature rise of the first tab 12.

In some embodiments, an end of the housing 20 in the first direction X is provided with a second recess 24, and the second recess 24 is recessed relative to a surface of the second housing wall 22 facing away from the first housing wall 21. The first recess 23 and the second recess 24 are respectively located on both sides of the second housing wall 22 in the first direction X.

In some embodiments, in the second direction Z, at least part of the second tab 13 is located between the bottom wall of the second recess 24 and the first housing wall 21.

Exemplarily, the electrode lead-out member electrically connected to the first tab 12 may be referred to as a first electrode lead-out member. The battery cell 6 further includes a second electrode lead-out member electrically connected to the second tab 13.

When two battery cells 6 are arranged in the second direction Z and need to be connected in parallel, the first recess 23 of one battery cell 6 may avoid the first electrode lead-out member of the other battery cell 6, and the second recess 24 of the one battery cell 6 may avoid the second electrode lead-out member of the other battery cell 6.

When two battery cells 6 are arranged in the second direction Z and need to be connected in series, the first recess 23 of one battery cell 6 may avoid the second electrode lead-out member of the other battery cell 6, and the second recess 24 of the one battery cell 6 may avoid the first electrode lead-out member of the other battery cell 6.

In some embodiments, the housing 20 includes a shell 20a and a cover plate 20b arranged opposite to each other in the second direction Z, the shell 20a has an opening, and the cover plate 20b covers the opening. The cover plate 20b includes a first housing wall 21 and the shell 20a includes a second housing wall 22.

The shell 20a and the cover plate 20b may cover each other to form accommodation space in which the electrode assembly is accommodated. The shell 20a and the cover plate 20b are easy to mold and assemble.

In some embodiments, the insulating bracket 40 is fixed to the cover plate 20b.

In some embodiments, the shell 20a is welded to the cover plate 20b.

In some embodiments, the shell 20a and the cover plate 20b are both made of a metal material. The metal material has a higher strength and a better thermal conductivity, and the use of the shell 20a and the cover plate 20b made of the metal material may improve the cycle performance of the battery cell 6 and improve the reliability of the battery cell 6.

In some embodiments, the electrode assembly is a laminated structure.

In some embodiments, the electrode assembly 10 includes a plurality of first electrode sheets and a plurality of second electrode sheets, the polarity of the first electrode sheets is opposite to the polarity of the second electrode sheets, and the plurality of first electrode sheets and the plurality of second electrode sheets are alternately stacked in the second direction Z.

The electrode assembly 10 is of a laminated structure, which may improve the space utilization rate and improve the energy density of the battery cell.

In some embodiments, the first recess 23 and the second recess 24 are arranged in the shell 20a.

In some embodiments, the thickness of the shell 20a is 0.1 mm to 0.8 mm, to balance the strength and weight of the shell 20a, improve the reliability of the battery cell 6, and increase the energy density of the battery cell 6.

Optionally, the thickness of the shell 20a is 0.1 mm, 0.2 mm, 0.3 mm, 0.4 mm, 0.5 mm, 0.6 mm, 0.7 mm, or 0.8 mm.

In some embodiments, the thickness of the shell 20a is 0.2 mm to 0.5 mm.

In some embodiments, the dimension of the housing 20 in the first direction X is L1, the dimension of the housing 20 in the second direction Z is L2, and the dimension of the housing 20 in the third direction Y is L3. 3≤L1/L3≤7, 2≤L3/L2≤7.

The first tab 12 extends from the end of the main body portion 11 in the first direction X, which may occupy additional space in the first direction X, the larger L1 is, the smaller the dimension ratio of the first tab 12 in the first direction X is, and the higher the space utilization rate of the battery cell in the first direction X is.

The first tab 12 and the main body portion 11 may share space in the third direction Y. The larger L3 is, the larger the current flow area of the first tab 12 is, the better the current flow capacity of the first tab 12 is, and the lower the heat generation is.

L2 may be the thickness of the battery cell. The smaller L2 is, the upward radiating path of the main body portion 11 is, and the temperature rise of the battery cell 6 during charging and discharging is. However, the smaller L2 is, the thinner the battery cell is, and the battery cell 6 is more likely to be deformed under the external impact during the production, transportation and use of the battery cell 6.

On the premise of a certain volume of the battery cell, L1/L3 is defined as 3-7 and L3/L2 is defined as 2-7, which may balance the space utilization rate of the battery cell in the first direction and the overcurrent capability of the first tab 12, reduce the temperature rise of the battery cell, reduce the risk of deformation of the battery cell 6 under the external impact, and improve the reliability and cycle performance of the battery cell 6.

Optionally, L1/L3 is 3, 4, 5, 6 or 7.

Optionally, L3/L2 is 2, 3, 4, 5, 6, or 7.

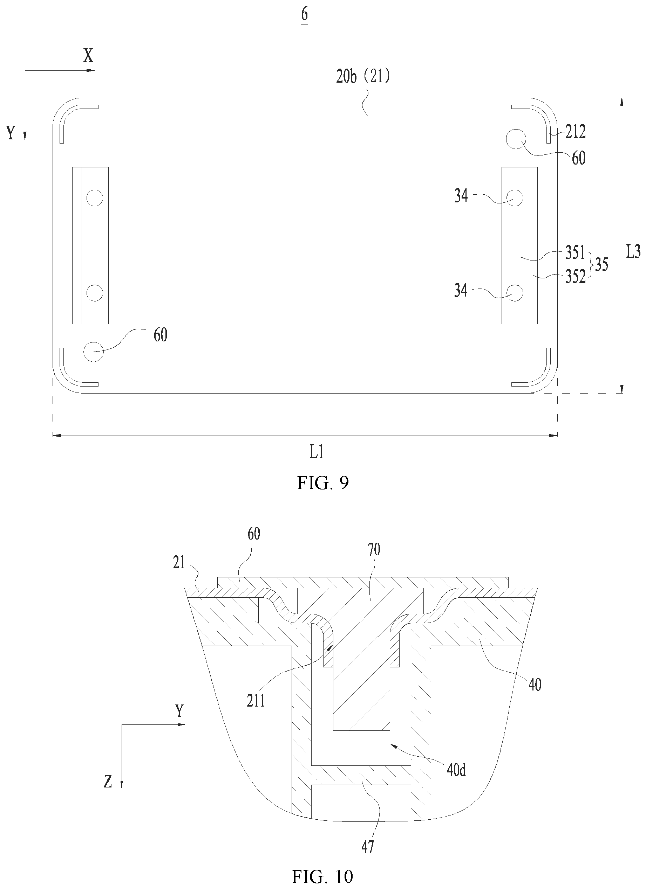

FIG. 9 is a schematic diagram of a battery cell according to some embodiments of the present application; and FIG. 10 is a partial cross-sectional view of the battery cell shown in FIG. 9.

Referring to FIG. 9 and FIG. 10, in some embodiments, the housing 20 is provided with a liquid injection hole 211. In the production process of the battery cell, the electrolyte may be injected into the housing 20 through the liquid injection hole 211.

There may be one or more of the liquid injection holes 211.

In some embodiments, the insulating bracket 40 is provided with a liquid injection channel 40d, and the liquid injection channel 40d communicates with space between the main body portion 11 and the insulating bracket 40. A peripheral wall of the liquid injection channel 40d includes a drainage wall 47, and in the axial direction of the liquid injection hole 211, the liquid injection hole 211 is opposite to the drainage wall 47, and the liquid injection channel 40d is located on a side of the drainage wall 47 facing the liquid injection hole 211.

The drainage wall 47 of the insulating bracket 40 may withstand the impact of the electrolyte solution and guide the electrolyte solution to flow in the liquid injection channel 40d, thereby reducing the direct impact of the electrolyte solution on the main body portion 11 and reducing the deformation of the isolating member.

In some embodiments, the liquid injection channel 40d forms a liquid injection opening 40e in a surface of the insulating bracket 40 facing the main body portion 11. The electrolyte solution may flow out through the liquid injection opening 40e and infiltrate the main body portion 11, thereby improving the infiltration efficiency.

In some embodiments, the liquid injection channel 40d is arranged on one support block 46. The support block 46 includes the drainage wall 47.

In some embodiments, the liquid injection hole 211 is formed in the first housing wall 21.

In some embodiments, the battery cell 6 includes a first sealing member 60, and the first sealing member 60 is connected to the first housing wall 21 and covers the liquid injection hole 211 from the outside to seal the liquid injection hole 211.

Exemplarily, the first sealing member 60 is welded to the first housing wall 21.

In some embodiments, the battery cell 6 includes a second sealing member 70, and the second sealing member 70 is inserted into the liquid injection hole 211 and is in interference fit with the liquid injection hole 211.

Exemplarily, the second sealing member 70 includes a rubber nail.

In some embodiments, the first housing wall 21 is provided with a pressure relief mechanism 212. There may be one or more of the pressure relief mechanisms 212.

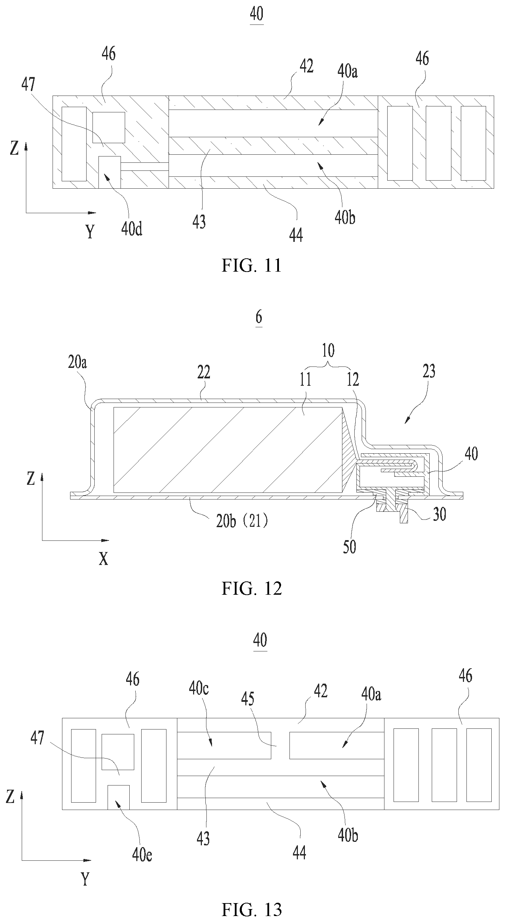

FIG. 11 is a cross-sectional view of an insulating bracket of a battery cell according to some other embodiments of the present application.

As shown in FIG. 5 and FIG. 11, in some embodiments, a side of the insulating bracket 40 facing the main body portion 11 is provided with a second accommodating recess 40b, and the second accommodating recess 40b and the first accommodating recess 40a are arranged in the second direction Z. The liquid injection channel 40d is located on a side of the second accommodating recess 40b in the third direction Y and communicates with the second accommodating recess 40b, and the first direction X, the second direction Z and the third direction Y are perpendicular to each other.

The second accommodating recess 40b and the liquid injection channel 40d may change the flow direction of the electrolyte solution, reduce the direct impact on the main body portion 11, reduce the risk of deformation of the isolating member of the main body portion 11, and improve the reliability.

Exemplarily, the liquid injection channel 40d is formed in one support block 46.

The second accommodating recess 40b is opposite to the main body portion 11 in the first direction X, and the second accommodating recess 40b has a relatively large flow area, which may improve the infiltration efficiency of the electrolyte and reduce the impact on the main body portion 11.

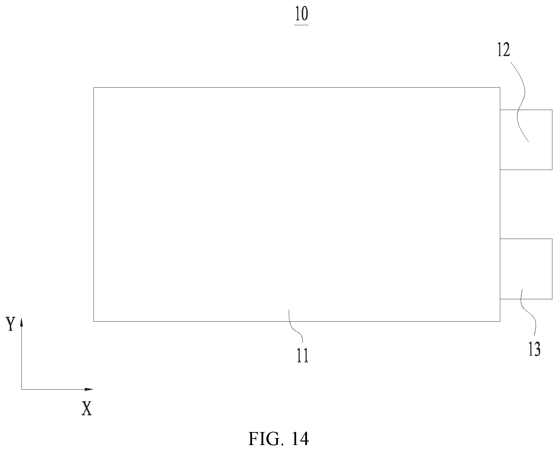

FIG. 12 is a cross-sectional view of a battery cell according to some other embodiments of the present application; FIG. 13 is a schematic structural diagram of the insulating bracket shown in FIG. 12; and FIG. 14 is a schematic structural diagram of an electrode assembly of a battery cell according to some embodiments of the present application.

As shown in FIGS. 12 to 14, in some embodiments, the electrode assembly 10 further includes a second tab 13, a polarity of the second tab 13 is opposite to a polarity of the first tab 12, the first tab 12 and the second tab 13 extend from an end of the main body portion 11 in the first direction X and are spaced apart in a third direction Y, and the third direction Y is perpendicular to the first direction X. A side of the insulating bracket 40 facing the main body portion 11 is provided with a third accommodating recess 40c, and the third accommodating recess 40c and the first accommodating recess 40a are spaced apart in the third direction Y. At least part of the second tab 13 extends into the third accommodating recess 40c.

The insulating bracket 40 is provided with both the first accommodating recess 40a for accommodating the first tab 12 and the third accommodating recess 40c for accommodating the second tab 13, so as to reduce the risk of short circuit, simplify the structure of the battery cell, and improve the energy density of the battery cell.

In some embodiments, the insulating bracket 40 further includes a partition plate 45, and the partition plate 45 separates the first accommodating recess 40a from the third accommodating recess 40c.

Exemplarily, both ends of the partition plate 45 in the second direction Z are respectively connected to the first limiting plate 42 and the second limiting plate 43, and one end of the partition plate 45 in the first direction X is connected to the insulating substrate 41.

In some embodiments, a thickness of the partition plate 45 is greater than a thickness of the second limiting plate 43.

The partition plate 45 has a relatively large thickness to increase a creepage distance between the first tab 12 and the second tab 13.

In some embodiments, a dimension of the partition plate 45 in the first direction X is greater than a dimension of the second limiting plate 43 in the first direction X, and is less than or equal to a dimension of the first limiting plate 42 in the first direction X.

According to some embodiments of the present application, the present application provides a battery cell, including a housing, an electrode assembly, an electrode lead-out member, and an insulating bracket. The housing includes a first housing wall. The electrode assembly is accommodated in the housing and includes a main body portion and a first tab, the first tab extending out through an end of the main body portion in a first direction. The electrode lead-out member is arranged on the housing and is electrically connected to the first tab. The insulating bracket is accommodated in the housing and is arranged in a first direction with the main body portion, the insulating bracket is located on a side of the first housing wall in a second direction, and the first direction is perpendicular to the second direction. A side of the insulating bracket facing the main body portion is provided with a first accommodating recess, and at least part of the first tab extends into the first accommodating recess.

The insulating bracket includes an insulating substrate, a first limiting plate, a second limiting plate, and a third limiting plate, the insulating substrate and the main body portion are spaced apart in the first direction, the first limiting plate and the second limiting plate are located on a side of the insulating substrate facing the main body portion and are spaced apart in the second direction, the third limiting plate is located on a side of the second limiting plate facing the first housing wall and is connected to the insulating substrate, the first limiting plate is located on a side of the second limiting plate away from the first housing wall, and the first accommodating recess is located between the first limiting plate and the second limiting plate. In the first direction, an end of the first limiting plate facing the main body portion exceeds beyond an end of the second limiting plate facing the main body portion, and the first tab is insulated from the housing; in the second direction, at least part of the third limiting plate is located between the first housing wall and the electrode lead-out member.

According to some embodiments of the present application, an embodiment of the present application further provides a battery, including a plurality of battery cells in any one of the above embodiments.

According to some embodiments of the present application, the present application provides an electric device including the battery cell in any one of the above embodiments, the battery cell being used for providing electrical energy to the electric device. The electric device may be any one of the above devices and system using the battery cell.

Referring to FIGS. 4 to 8, the embodiment of the present application provides a battery cell 6 including an electrode assembly 10, a housing 20, an electrode lead-out member 30, and an insulating bracket 40.

The electrode assembly 10 is accommodated in the housing 20 and includes a main body portion 11, a first tab 12 and a second tab 13, and the first tab 12 and the second tab 13 respectively extend from ends of the main body portion 11 in the first direction X. The first tab 12 and the second tab 13 have opposite polarities.

The housing 20 includes a shell 20a and a cover plate 20b, the shell 20a has an opening, and the cover plate 20b is configured to cover the opening. The cover plate 20b and the shell 20a are arranged in the second direction Z. Optionally, the second direction Z is perpendicular to the first direction X.

Both ends of the shell 20a in the first direction X are provided with a first recess 23 and a second recess 24, the first recess 23 is recessed relative to the surface of the shell 20a away from the cover plate 20b, and the second recess 24 is recessed relative to the surface of the shell 20a away from the cover plate 20b.

The electrode lead-out member 30 is fixed to the cover plate 20b. The electrode lead-out member 30 includes a first connecting plate 31, a second connecting plate 32, a third connecting plate 33, an electrode terminal 34, and a terminal block 35.

The first connecting plate 31 and the third connecting plate 33 are spaced apart from each other in the second direction Z, and the first connecting plate 31 is located on a side of the third connecting plate 33 facing away from the cover plate 20b. The first connecting plate 31 and the third connecting plate 33 are located on the same side of the main body portion 11 in the first direction X, and the second connecting plate 32 is connected to an end of the first connecting plate 31 close to the main body portion 11 and an end of the third connecting plate 33 close to the main body portion 11.

The electrode terminal 34 protrudes from a surface of the third connecting plate 33 facing the cover plate 20b and penetrates the cover plate 20b to extend to the outside of the cover plate 20b. The terminal block 35 is located on a side of the cover plate 20b facing away from the shell 20a.

The first connecting plate 31, the second connecting plate 32, the third connecting plate 33 and the electrode terminal 34 are of an integrated structure, and a portion of the electrode terminal 34 extending beyond the cover plate 20b is riveted to the terminal block 35, such that the terminal block 35 and the electrode terminal 34 are fixed to the cover plate 20b.

In the second direction Z, the projection of the terminal block 35 is located within the projection of the first recess 23.

The first tab 12 includes a first portion 121, a bent portion 122, and a second portion 123. The first portion 121 is located on a side of the first connecting plate 31 facing away from the third connecting plate 33 and is welded to the first connecting plate 31. The bent portion 122 extends from an end of the first portion 121 away from the main body portion 11 and is bent along an end of the first connecting plate 31 away from the main body portion 11. The second portion 123 extends from an end of the bent portion 122 away from the first portion 121 toward the main body portion 11, and in the second direction Z, at least part of the second portion 123 is located between the first connecting plate 31 and the third connecting plate 33.

The insulating bracket 40 includes an insulating substrate 41, a first limiting plate 42, a second limiting plate 43, and a third limiting plate 44, the insulating substrate 41 and the main body portion 11 are spaced apart from each other in the first direction X, and the first limiting plate 42, the second limiting plate 43, and the third limiting plate 44 are located on a side of the insulating substrate 41 facing the main body portion 11 and are sequentially spaced apart from each other in the second direction Z.

The insulating substrate 41, the first limiting plate 42, and the second limiting plate 43 define a first accommodating recess 40a, and one end of the first connecting plate 31 away from the main body portion 11 extends into the first accommodating recess 40a, such that the bent portion 122 is accommodated in the first accommodating recess 40a.

The insulating substrate 41, the third limiting plate 44, and the second limiting plate 43 define a second accommodating recess 40b, and one end of the third connecting plate 33 away from the main body portion 11 extends into the second accommodating recess 40b.

The first limiting plate 42, the second limiting plate 43, and the third limiting plate 44 are arranged on a side in a direction toward the cover plate 20b. At least part of the third limiting plate 44 is clamped between the cover plate 20b and the third connecting plate 33 in the second direction Z, such that the insulating bracket 40 is fixed to the cover plate 20b. The thickness of the second limiting plate 43 is greater than the thickness of the first limiting plate 42.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery cell, comprising:
a housing;
an electrode assembly, accommodated in the housing and comprising a main body portion and a first tab, the first tab extending from an end of the main body portion in a first direction;
an electrode lead-out member, arranged on the housing and electrically connected to the first tab; and
an insulating bracket, accommodated in the housing and arranged in the first direction with the main body portion, wherein a part of the insulating bracket is located between the electrode lead-out member and the housing, and the insulating bracket is provided with a first accommodating recess on a side facing the main body portion, at least part of the first tab extending into the first accommodating recess.

2. The battery cell according to claim 1, wherein the first tab is bent in the first accommodating recess.

3. The battery cell according to claim 1 or 2, wherein the first tab comprises:
a first portion, connected to the main body portion and the electrode lead-out member;
a bent portion, extending from an end of the first portion away from the main body portion and bent relative to the first portion, the bent portion being accommodated in the first accommodating recess; and
a second portion, extending from one end of the bent portion away from the first portion toward the main body portion.

4. The battery cell according to any one of claims 1 to 3, wherein the insulating bracket comprises an insulating substrate, a first limiting plate and a second limiting plate, the insulating substrate and the main body portion being spaced apart in the first direction;
the first limiting plate and the second limiting plate are located on a side of the insulating substrate facing the main body portion and are spaced apart from each other in a second direction, the first direction being perpendicular to the second direction; and
the first accommodating recess is located between the first limiting plate and the second limiting plate.

5. The battery cell according to claim 4, wherein a thickness of the second limiting plate is greater than a thickness of the first limiting plate.

6. The battery cell according to claim 4 or 5, wherein the second limiting plate supports the first tab.

7. The battery cell according to any one of claims 4 to 6, wherein in the first direction, an end of the first limiting plate facing the main body portion exceeds beyond an end of the second limiting plate facing the main body portion, and the first tab is insulated from the housing.

8. The battery cell according to claim 7, wherein a dimension of the first limiting plate protruding from the insulating substrate in the first direction is D1, and a dimension of the second limiting plate protruding from the insulating substrate in the first direction is D2;
D1 and D2 satisfy 0.3≤D2/D1≤0.7.

9. The battery cell according to any one of claims 4 to 8, wherein
the electrode lead-out member comprises a first connecting plate connected to the first tab, the first connecting plate is located between the main body portion and the insulating substrate in the first direction, and an end of the first connecting plate away from the main body portion is located between the first limiting plate and the second limiting plate in the second direction; and
the first tab is bent in the first accommodating recess along an end of the first connecting plate away from the main body portion.

10. The battery cell according to claim 9, wherein
the electrode lead-out member further comprises a second connecting plate, the second connecting plate is connected to an end of the first connecting plate close to the main body portion, and the second connecting plate separates an end of the first tab from the main body portion in the first direction.

11. The battery cell according to claim 10, wherein the housing comprises a first housing wall, the electrode assembly and the insulating bracket are located on a same side of the first housing wall in the second direction, and the first limiting plate is located on a side of the second limiting plate facing away from the first housing wall; and
the electrode lead-out member further comprises a third connecting plate and an electrode terminal, the third connecting plate is located on a side of the first connecting plate facing the first housing wall, the second connecting plate connects the first connecting plate and the third connecting plate, and the electrode terminal is connected to the third connecting plate and passes through the first housing wall.

12. The battery cell according to claim 11, wherein the first connecting plate, the second connecting plate, the third connecting plate and the electrode terminal are of an integrally formed structure.

13. The battery cell according to any one of claims 4 to 12, wherein
the housing comprises a first housing wall, and the insulating bracket is located on a side of the first housing wall in the second direction;
the insulating bracket further comprises a third limiting plate, the third limiting plate is located on a side of the second limiting plate facing the first housing wall and is connected to the insulating substrate, and the first limiting plate is located on a side of the second limiting plate away from the first housing wall; and
in the second direction, at least part of the third limiting plate is located between the first housing wall and the electrode lead-out member.

14. The battery cell according to claim 13, wherein in the first direction, an end of the second limiting plate facing the main body portion exceeds beyond an end of the third limiting plate facing the main body portion.

15. The battery cell according to any one of claims 1 to 14, further comprising an insulating member, wherein at least part of the insulating member is located between the housing and the electrode lead-out member.

16. The battery cell according to claim 15, wherein the insulating bracket is connected to the insulating member.

17. The battery cell according to claim 15 or 16, wherein an end of the insulating member away from the main body portion in the first direction is provided with an insulating recess, and at least part of the insulating bracket is inserted into the insulating recess.

18. The battery cell according to claim 17, wherein a portion of the insulating bracket inserted into the insulating recess is clamped between the housing and the insulating member in an interference fit manner in a second direction, the second direction being perpendicular to the first direction.

19. The battery cell according to any one of claims 1 to 18, wherein in the first direction, the insulating bracket abuts against the main body portion.

20. The battery cell according to any one of claims 1 to 19, wherein the housing is provided with a liquid injection hole;
the insulating bracket is provided with a liquid injection channel, and the liquid injection channel communicates with space between the main body portion and the insulating bracket; and
a peripheral wall of the liquid injection channel comprises a drainage wall, the liquid injection hole is opposite to the drainage wall in an axial direction of the liquid injection hole, and the liquid injection channel is located on a side of the drainage wall facing the liquid injection hole.

21. The battery cell according to claim 20, wherein the liquid injection channel forms a liquid injection opening in a surface of the insulating bracket facing the main body portion.

22. The battery cell according to claim 20 or 21, wherein
a side of the insulating bracket facing the main body portion is provided with a second accommodating recess, and the second accommodating recess and the first accommodating recess are arranged in a second direction; and
the liquid injection channel is located on a side of the second accommodating recess along a third direction and communicates with the second accommodating recess, and the first direction, the second direction and the third direction are perpendicular to each other.

23. The battery cell according to any one of claims 1 to 22, wherein
a side of the insulating bracket facing the main body portion is provided with a plurality of accommodating recesses, the plurality of accommodating recesses are arranged in the second direction, and the second direction is perpendicular to the first direction;
one of the plurality of accommodating recesses is the first accommodating recess;
a sum of dimensions of the plurality of accommodating recesses in the second direction is D3, and a dimension of the insulating bracket in the second direction is D4; and
D3 and D4 satisfy 0.3≤D3/D4≤0.7.

24. The battery cell according to any one of claims 1 to 23, wherein
the electrode assembly further comprises a second tab, a polarity of the second tab is opposite to a polarity of the first tab, the first tab and the second tab extend from an end of the main body portion in the first direction and are spaced apart in the third direction, and the third direction is perpendicular to the first direction;
a side of the insulating bracket facing the main body portion is provided with a third accommodating recess, and the third accommodating recess and the first accommodating recess are spaced apart in the third direction; and
at least part of the second tab extends into the third accommodating recess.

25. The battery cell according to any one of claims 1 to 24, wherein the housing comprises a first housing wall and a second housing wall oppositely arranged in the second direction, the main body portion is located between the first housing wall and the second housing wall, and the second direction is perpendicular to the first direction;
the housing is provided with a first recess, and the first recess is recessed toward the first housing wall relative to an outer surface of the second housing wall;
the electrode lead-out member comprises a terminal block located on a side of the first housing wall facing away from the second housing wall; and
in the second direction, a projection of the terminal block is located within a projection of the first recess.

26. The battery cell according to claim 25, wherein in the second direction, a projection of the insulating bracket at least partially overlaps the projection of the first recess.

27. The battery cell according to claim 25 or 26, wherein the housing comprises a shell and a cover plate oppositely arranged in the second direction, the shell has an opening, and the cover plate covers the opening; and
the cover plate comprises the first housing wall, the shell comprising the second housing wall.

28. The battery cell according to any one of claims 1 to 27, wherein a dimension of the housing in the first direction is L1, a dimension of the housing in the second direction is L2, a dimension of the housing in the third direction is L3, and the first direction, the second direction, and the third direction are perpendicular to each other; and $3 \leq L 1 / L 3 \leq 7 , 2 \leq L 3 / L 2 \leq 7 .$

29. A battery, comprising a plurality of battery cells according to any one of claims 1 to 28.

30. An electric device, comprising the battery according to claim 29, the battery being configured to provide electric energy.
